# EUROPEAN PATENT APPLICATION

(11) **EP 3 413 249 A1**
(43) Date of publication of application: **12.12.2018**
(21) Application number: 18175120.7
(22) Date of filing: 30.05.2018
(51) Int. Cl.: G06Q 10/10, G06Q 50/22

(54) **DYNAMIC FULL PRODUCTION LIFECYCLE PHARMACEUTICAL DATA DISTRIBUTION**

(30) Priority: 07.06.2017 FR 1755038
(71) Applicant: Tracelink, Inc., North Reading, MA 01864 (US)
(72) Inventor: DEUS, Lucy, Reading, MA Massachusetts 01867 (US); CIANCIOLO, Paul, Boston, MA Massachusetts 02118 (US); DAHOD, Shabbir, Andover, MA Massachusetts 01810 (US)
(74) Representative: Dupuis-Latour, Dominique

(57) **Abstract**

A dynamic pharmaceutical data distribution method includes establishing a communicative coupling between a dispensary computing system (210) that monitors drug lifecycle data for drugs distributed by the dispensary, and both a compliance computer information system (220) that manages lifecycle events for different ones of the drugs based upon serialized information for the drugs, and also a product information network (230) that provides access to drug data from a multiplicity of different drug data repositories for respectively different manufacturers of the drugs. The method also includes receiving and storing status information in the dispensary computing system (210) for different ones of the drugs from the compliance computer information system (220). Then, a device (270) of a consumer is registered with respect to a specific one of the drugs by the dispensary computing system and the status information for the specific drug and the received drug data are transmitted to the device.

## Description

The present invention relates to the field of drug supply chain management and more particularly to the field of drug tracing, verification and archiving.

The pharmaceutical supply chain is the means through which prescription medicines are delivered to patients. Pharmaceuticals originate in manufacturing sites from which the pharmaceuticals are transferred to wholesale distributors and then stocked at retail, mail-order, and other types of pharmacies. Thereafter, stocked pharmaceuticals are processed by pharmacy benefit management companies and dispensed by pharmacies for ultimate consumption by different patient-consumers. Given that pharmaceuticals are drugs, most nations regulate the manufacture, distribution and sale of pharmaceuticals for which the detailed tracking of drugs throughout the supply chain remains of central importance.

US 6 067 524 discloses a system adapted, when delivering a drug to a patient, for automatically generating a patient-specific advisory message based on information data record issued at the pharmacy level.

In the modern era, drug supply chain management has become a task for enterprise computing. In this regard, enterprise computing as a tool provides cradle to grave tracking of pharmaceuticals from the time of manufacture to the time of consumption. It is to be recognized, however, that with the over four billion prescriptions filled for prescription drugs in the United States alone in the past year, tracking the lifecycle of a prescription drug is a task that only could be performed by an advanced computing system.

Of import, part and parcel to the task of drug lifecycle monitoring and management is the combatting of counterfeit drug distribution. To that end, it is necessary so as to implement product serialization. Serialization requires a comprehensive system to assign a unique serial number to each product so as to track and trace the passage of prescription drugs through the entire supply chain. Serialization potentially identifies every product by a unique serial number in addition to the origin, shelf life and batch number for that product. Consequently, serialization allows the lifecycle of the product to be traced from production, through distribution, and finally to the patient.

Given the effectiveness of serialization, many national governments including those of the industrialized world, as a matter of governmental regulatory power, require the coordination of participants in the drug manufacturing and distribution supply chain to engage in a mandated system of serialization, primarily for the purpose of ensuring the safety and authenticity of a distributed drug. However, the international adoption of regulatory standards pertaining to serialization primarily focus upon the manufacture and distribution of a drug to the point of dispensing. But, international serialization requirements do not go so far as to comprehensively embrace the utilization of a drug by the consumer. Embodiments of the present invention address deficiencies of the art in respect to drug data distribution and provide a novel and non-obvious method, system and computer program product for dynamic pharmaceutical data distribution. In an embodiment of the invention, a dynamic pharmaceutical data distribution method includes the establishment of a communicative coupling between a dispensary computing system that monitors drug lifecycle data for drugs distributed by the dispensary, and both a compliance computer information system that manages lifecycle events for different ones of the drugs based upon serialized information for the drugs, and also a product information network that provides access to drug data from a multiplicity of different drug data repositories for respectively different manufacturers of the drugs.

The method also includes the receipt of status information in the dispensary computing system for different ones of the drugs from the compliance computer information system, and the storage in the dispensary computing system of the status information for the different ones of the drugs in connection with a corresponding product identifier, serial number, lot number, expiration date and time stamp for each of the different ones of the drugs. The method yet further includes the registration of a mobile computing device of a consumer with respect to a specific one of the drugs by the dispensary computing system. Finally, the method includes the transmission to the mobile computing device from the dispensary computing system of status information for the specific one of the drugs stored in the dispensary computing system and also drug data received from one of the different drug data repositories for a corresponding one of the manufacturers manufacturing the specific one of the drugs.

In one aspect of the embodiment, the compliance computing information system is a national compliance computing information system managed by an agency of a national government. In another aspect of the embodiment, the dispensary computing system is managed in a pharmacy. In yet another aspect of the embodiment, the dispensary computing system is managed in an office of a physician. Optionally, the drug data is received from the one of the different drug data repositories in response to a dispensing of the specific one of the drugs to the consumer. As another option, the drug data is received from the one of the different drug data repositories in response to a verification of the specific one of the drugs to the consumer based upon the serial number of the specific one of the drugs. As yet a further option, the drug data is received from the one of the different drug data repositories in response to a bar code scanning of the specific one of the drugs by the dispensary computing system on behalf of the consumer. Of note, the drug data that is received from one of the different drug data repositories for a corresponding one of the manufacturers manufacturing the specific one of the drugs may include information indicating a proper use of the specific one of the drugs. As well, the drug data received from one of the different drug data repositories for a corresponding one of the manufacturers manufacturing the specific one of the drugs may be filtered to a subset of drug data according to criteria specified in the dispensary computing system.

In another embodiment of the invention, a dynamic pharmaceutical data distribution system includes a dispensary computing system communicatively coupled to both a compliance computer information system managing lifecycle events for different ones of the drugs based upon serialized information for the drugs, and also a product information network providing access to drug data from a multiplicity of different drug data repositories for respectively different manufacturers of the drugs. The system also includes a dynamic pharmaceutical data distribution module. The module includes program code executing in the memory of the dispensary computing system.

During execution, the program code is enabled to receive status information for different ones of the drugs from the compliance computer information system and to store the status information for the different ones of the drugs in connection with a corresponding product identifier, serial number, lot number, expiration date and time stamp for each of the different ones of the drugs. As well, the program code is enabled to register a mobile computing device of a consumer with respect to a specific one of the drugs and to transmit to the mobile computing device status information for the specific one of the drugs stored in the dispensary computing system and also drug data received from one of the different drug data repositories for a corresponding one of the manufacturers manufacturing the specific one of the drugs.

Additional aspects of the invention will be set forth in part in the description which follows, and in part will be obvious from the description, or may be learned by practice of the invention. It is to be understood that both the foregoing general description and the following detailed description are exemplary and explanatory only and are not restrictive of the invention.

The accompanying drawings, which are incorporated in and constitute part of this specification, illustrate embodiments of the invention and together with the description, serve to explain the principles of the invention. The embodiments illustrated herein are presently preferred, it being understood, however, that the invention is not limited to the precise arrangements and instrumentalities shown, wherein:
Figure 1 is a pictorial illustration of a process for dynamic pharmaceutical data distribution;
Figure 2 is a schematic diagram of a computer data processing system configured for dynamic pharmaceutical data distribution; and,
Figure 3 is a flow chart illustrating a process for dynamic pharmaceutical data distribution.

Embodiments of the invention provide for the dynamic distribution of pharmaceutical data. In accordance with an embodiment of the invention, different dispensary computing systems in different dispensaries such as pharmacies and physician offices enjoy communications with each of a compliance computer information system that manages lifecycle events for different drugs based upon serialized information for the drugs, and also a product information network that provides access to drug data from a multiplicity of different drug data repositories for respectively different manufacturers of the drugs. In response to the dispensing or verification of a drug at one of the dispensaries to a consumer, a product identifier and serial number of the drug is identified. Thereafter, the status of the drug as dynamically updated in a dispensary computing system of the one of the dispensaries by the compliance computer information system is obtained and drug data such as usage data is retrieved from the product information network based upon the product identifier. Optionally, the drug data is filtered based upon criteria specified at the dispensary computing system. Finally, the drug data and status is transmitted from the dispensary computing system to a mobile device of the consumer.

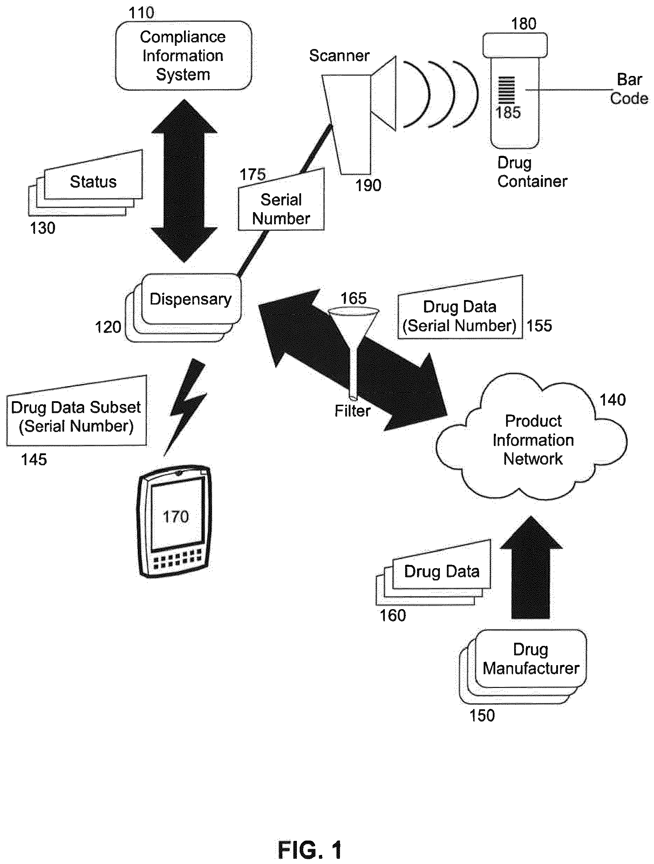

In further illustration, Figure 1 pictorially shows a process for dynamic pharmaceutical data distribution. As shown in Figure 1, different dispensaries 120 are communicatively linked to a compliance information system 110 such as a national compliance information system in which status information 130 for serialized pharmaceuticals are stored as reported by different entities in the pharmaceutical supply chain. The different dispensaries 120 are also communicatively linked to a product information network 140 through which drug data 160 for different pharmaceuticals manufactured by different drug manufacturers 150 are collected and dynamically updated.

A mobile device 170 of a consumer registers with one of the dispensaries 120 and thereafter, a request is received to either verify or dispense a particular drug to the consumer. In response, a bar code 185 affixed to a container 180 holding the particular drug is scanned by scanner 190 and a serial number 175 and optionally a product identifier (not shown) is retrieved. Using the serial number, a current one of the status information 130 is retrieved. As well, the drug data 155 for the serial number (or optionally a product identifier derived from the serial number or provided separately from the serial number) is retrieved in the product information network 140 from a relevant one of the drug manufacturers 150 and subjected to a filter 165 in order to produce a drug data subset 145. Finally, the current one of the status information 130 and the drug data subset 145 are transmitted from the one of the dispensaries 120 to the mobile device 170.

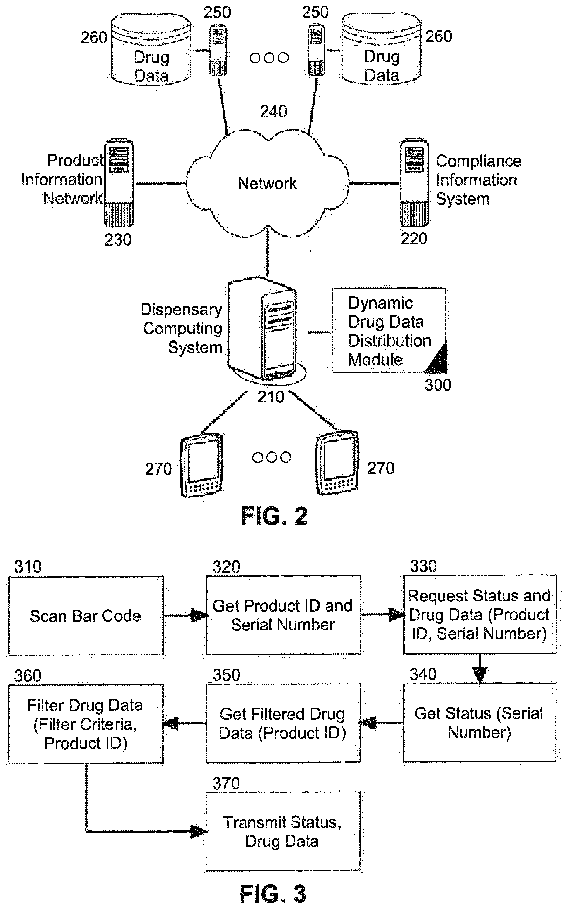

The process described in connection with Figure 1 may be implemented in a data processing system. In further illustration, Figure 2 schematically shows a computer data processing system configured for dynamic pharmaceutical data distribution. The system includes a dispensary computing system 210 communicatively coupled over computer communications network 240 to a compliance information system 220. The compliance information system 220 may be a national compliance information system managed on behalf of an agency of a national government, or the compliance information system 220 may be managed within a private network such as product information network 230.

In this regard, the dispensary computing system 210 also may be communicatively coupled to product information network 230. The product information network 230 may include an enterprise computing system in which drug data is retrieved from the different computing systems 250 of different drug manufacturers storing the drug data in respectively different repositories 260. For instance, the product information network 230 may be configured to access the drug data through interactions with respectively different user interfaces of the different computing system 250, or the product information network 230 may be configured to programmatically access the drug data through an application programming interface (API) supplied by each of the different computing systems 250.

Of import, a dynamic drug data distribution module 300 is provided. The module 300 includes program code that when executing in the memory by one or more processors of the dispensary computing system 210, is enabled to respond to a request by a consumer to verify or dispense a specific drug by acquiring both a serial number and a product identifier for the specific drug. As well, a lot number, expiration date and time stamp may be acquired for the specific drug. Then, a current status for the specific drug may be determined based upon dynamically updated information in the compliance information system. Further, filtered drug data may be retrieved from the product information network based upon the product identifier for the specific drug. For instance, the drug data may include information indicating a proper use of the specific one of the drugs. Finally, the status information and filtered drug data is transmitted to a registered mobile device 270 for the consumer.

In even yet further illustration of the operation of the dynamic drug data distribution module 300, Figure 3 is a flow chart illustrating a process for dynamic pharmaceutical data distribution. Beginning in block 310, a bar code is scanned for a container containing a drug requested by a consumer at a pharmacy or physicians' office for verification or dispensing. From the bar code, in block 320 a product identifier and serial number for the drug is determined and in block 330, a current status and drug data for the specific drug is requested based upon the product identifier and serial number.

In block 340, the current status is retrieved from the compliance information system 220 based upon the serial number, and in block 350 drug data that has been filtered according to criteria specified at the dispensary is retrieved based upon the product identifier. Finally, in block 370 the current status and drug data is transmitted to a mobile device of the consumer. In this way, the consumer received the most current status of the specified drug as well as additional drug data as most recently dynamically updated by the manufacturer without requiring the consumer to independently execute electronic research regarding the product in general and the specifically dispensed drug.

The present invention may be embodied within a system, a method, a computer program product or any combination thereof. The computer program product may include a computer readable storage medium or media having computer readable program instructions thereon for causing a processor to carry out aspects of the present invention. The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network. The computer readable program instructions may execute entirely on the user's computer, partly on the user's computer, as a stand-alone software package, partly on the user's computer and partly on a remote computer or entirely on the remote computer or server. Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein includes an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which includes one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Finally, the terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "includes" and/or "including," when used in this specification, specify the presence of stated features, integers, steps, operations, elements, and/or components, but do not preclude the presence or addition of one or more other features, integers, steps, operations, elements, components, and/or groups thereof.

## Claims

1. A dynamic pharmaceutical data distribution method, **characterized by** comprising:
- establishing a communicative coupling between:
• a dispensary computing system (210) monitoring drug lifecycle data for drugs distributed by the dispensary (120), and
• both i) a compliance computer information system (110, 220) managing lifecycle events for different ones of the drugs, wherein said events are based upon serialized information for the drugs, and also ii) a product information network (140, 230) providing access to drug data from a multiplicity of different drug data repositories for respectively different manufacturers of the drugs;
- receiving status information (130) in the dispensary computing system (210) for different ones of the drugs from the compliance computer information system (110, 220) and storing in the dispensary computing system (210) the status information (130) for the different ones of the drugs in connection with a corresponding product identifier, serial number, lot number, expiration date and time stamp for each of the different ones of the drugs;
- registering a mobile computing device (170, 270) of a consumer with respect to a specific one of the drugs by the dispensary computing system (210); and
- transmitting to the mobile computing device (170, 270) from the dispensary computing system (210), status information (130) for the specific one of the drugs stored in the dispensary computing system and also drug data (160) received from one of the different drug data repositories for a corresponding one of the manufacturers manufacturing the specific one of the drugs.

2. The method of claim 1, wherein compliance computing information system (110, 220) is a national compliance computing information system managed by an agency of a national government.

3. The method of claim 1, wherein the dispensary computing system (210) is managed in a pharmacy.

4. The method of claim 1, wherein the dispensary computing system (210) is managed in an office of a physician.

5. The method of claim 1, wherein the drug data (160) received from one of the different drug data repositories for a corresponding one of the manufacturers (150) manufacturing the specific one of the drugs is information indicating a proper use of the specific one of the drugs.

6. The method of claim 1, wherein the drug data (160) received from one of the different drug data repositories for a corresponding one of the manufacturers (150) manufacturing the specific one of the drugs is filtered to a subset of drug data (145) according to criteria specified in the dispensary computing system (220).

7. The method of claim 1, wherein the drug data (160) is received from the one of the different drug data repositories in response to a dispensing of the specific one of the drugs to the consumer.

8. The method of claim 1, wherein the drug data (160) is received from the one of the different drug data repositories in response to a verification of the specific one of the drugs to the consumer based upon the serial number of the specific one of the drugs.

9. The method of claim 1, wherein the drug data (160) is received from the one of the different drug data repositories in response to a bar code (185) scanning of the specific one of the drugs by the dispensary computing system (210) on behalf of the consumer.

10. A dynamic pharmaceutical data distribution system, **characterized by** comprising:
- a dispensary computing system (210) communicatively coupled to both i) a compliance computer information system (110, 220) managing lifecycle events for different ones of the drugs, wherein said events are based upon serialized information for the drugs, and also ii) a product information network (140, 230) providing access to drug data from a multiplicity of different drug data repositories for respectively different manufacturers of the drugs, the dispensary computing system (210) comprising memory and at least one processor; and
- a dynamic pharmaceutical data distribution module (300) comprising program code executing in the memory of the dispensary computing system (210), the program code during execution by at least one processor of the dispensary computing system (210):
• receiving status information (130) for different ones of the drugs from the compliance computer information system (110, 220) and storing the status information (130) for the different ones of the drugs in connection with a corresponding product identifier, serial number, lot number, expiration date and time stamp for each of the different ones of the drugs;
• registering a mobile computing device (170, 270) of a consumer with respect to a specific one of the drugs; and
• transmitting to the mobile computing device (170, 270) status information (130) for the specific one of the drugs stored in the dispensary computing system and also drug data (160) received from one of the different drug data repositories for a corresponding one of the manufacturers (150) manufacturing the specific one of the drugs.

11. The system of claim 10, wherein compliance computing information system (110, 220) is a national compliance computing information system managed by an agency of a national government.

12. The system of claim 10, wherein the dispensary computing system (210) is managed in a pharmacy.

13. The system of claim 10, wherein the dispensary computing system (210) is managed in an office of a physician.

14. The system of claim 10, wherein the drug data (160) received from one of the different drug data repositories for a corresponding one of the manufacturers (150) manufacturing the specific one of the drugs is information indicating a proper use of the specific one of the drugs.

15. The system of claim 10, wherein the drug data (160) received from one of the different drug data repositories for a corresponding one of the manufacturers (150) manufacturing the specific one of the drugs is filtered to a subset of drug data (145) according to criteria specified in the dispensary computing system (210).

16. The system of claim 10, wherein the drug data (160) is received from the one of the different drug data repositories in response to a dispensing of the specific one of the drugs to the consumer.

17. The system of claim 10, wherein the drug data (160) is received from the one of the different drug data repositories in response to a verification of the specific one of the drugs to the consumer based upon the serial number of the specific one of the drugs.

18. The system of claim 10, wherein the drug data (160) is received from the one of the different drug data repositories in response to a bar code (185) scanning of the specific one of the drugs by the dispensary computing system (210) on behalf of the consumer.
